Europäisches Patentamt

European Patent Office

Office européen des brevets

(19)

(11) Publication number: **0 049 985**

A1

# (12) EUROPEAN PATENT APPLICATION

(21) Application number: **81304589.5**

(22) Date of filing: **05.10.81**

(51) Int. Cl.³: **C 08 G 18/10**
**C 08 K 5/04, C 08 K 5/36**
**C 08 K 5/45, C 08 L 75/04**
**C 09 D 3/72**

(30) Priority: **14.10.80 US 196900**

(43) Date of publication of application:
**21.04.82 Bulletin 82/16**

(84) Designated Contracting States:
**DE FR GB**

(71) Applicant: **UNIROYAL, INC.**
**1230 Avenue of the Americas Rockefeller Center**
**New York, New York 10020(US)**

(72) Inventor: **Gajewski, Vincent J.**
**44 Guinevere Ridge**
**Cheshire Connecticut(US)**

(74) Representative: **Harrison, Michael Robert et al,**
**URQUHART-DYKES & LORD 11th Floor Tower House**
**Merrion Way**
**Leeds LS2 8PB(GB)**

(54) **Polyurethane spray composition, a method of making a cured polyurethane article therefrom, and a cured polyurethane.**

(57) Polyurethane spray composition in two parts:
(A) polyurethane prepolymer
(B) polyurethane curative containing, as a viscosity reducing agent, one or more of the following: monoethers of ethylene glycol, monoethers of diethylene glycol, their acetates, the thioethers, their oxides or cyclic thioether oxides, having boiling points above 100°C and capable of dissolving the polyurethane curative. The composition may be a two-part system.

A method of making a cured polyurethane composition by spraying the above composition is also described as is the cured polyurethane.

EP 0 049 985 A1

POLYURETHANE SPRAY COMPOSITION, A METHOD OF MAKING A CURED POLYURETHANE ARTICLE THEREFROM, AND A CURED POLYURETHANE

This invention relates to a method of making a polyurethane, compositions useful in such method, and a polyurethane produced by such method.

In one aspect, the invention is concerned with a method of making a cured polyurethane article by spraying comprising the steps of:

    (i)    providing a composition which is a mixture of:
        (a)    a polyurethane prepolymer;
        (b)    a curative for the polyurethane prepolymer; and
        (c)    as a viscosity reducing agent, one or a combination of substances selected from the group consisting of the monoethers of ethylene glycol, the monoethers of diethylene glycol, their acetates, the thioethers, their oxides and cyclic thioether oxides, having boiling points above 100°C and capable of dissolving (b);
    (ii)    spraying the said mixture onto a surface; and
    (iii)    thereafter subjecting the sprayed mixture to curing conditions.

Polyurethanes generally comprise as essential components a polyol such as a higher molecular weight glycol, a polyisocyanate such as a diisocyanate, and a curative or chain extender such as a relatively low molecular weight polyamine or polyol. There are numerous applications for polyurethanes which are prepared by spray methods especially when it is deisred to apply a coating of polyurethane onto a surface. The two main spray methods are:

    1)    One-shot system; and,
    2)    Prepolymer system.

In the one-shot system usually two low viscosity streams of materials are employed, namely:

    a)    polyisocyanate; and,
    b)    mixture of polyol and curative.

The one-shot system (1) suffers certain deficiences especially the sensitivity of the polyisocyanate to moisture. Under humid conditions, even at a relatively short period of exposure to moisture in the air, the highly concentrated and reactive polyisocyanate tends to combine with the water present leading to extensive foaming in the resultant polyurethane. The advantages include working with low viscosity liquid materials and the general solubility of curatives in the polyols.

The prepolymer system (2) essentially employs two ingredient feed streams, namely:

    (i)   Polyurethane prepolymer; and,

    (ii)  Curative(s);

wherein (i) is a reaction product of polyisocyanate and a suitable polyol having residual reactive isocyanate moiety, and (ii) is a polyamine or polyol essentially used for providing the desired amount of chain extension and/or crosslinking. The disadvantage of this system lies in the rather high viscosity of such prepolymers (i) and the oftentimes solid nature of the curative (ii). It has been the practice to add certain inert volatile organic solvents in order to reduce the viscosity of the prepolymer (i) and place the curative (ii) into solution.

The prepolymer system leads to a product having physical properties superior to those of the one-shot system because in the latter the polyol and curatives compete with each other in the reaction with polyisocyanate, yet, the solvents added (about 30 to 70% by volume) such as toluene, methyl ethyl ketone, ethyl acetate, xylene etc., create hazards to human health because of toxicity or chances of explosion and fires. In addition, these solvents may be lost unless costly ventilation and recovery systems are installed.

This invention relates to the use of a "viscosity modifier" which when added to a urethane prepolymer system, sufficiently decreases viscosity and readily dissolves or solvates useful polyurethane curatives so that the two components--prepolymer and curative--can be readily metered, mixed, and sprayed using conventional commercial spray equipment. The viscosity modifier employed in the invention is a substance which essentially is not readily volatile and hence the system is free of volatile solvents.

The novel viscosity modifier employed in the invention is one or a combination of the following: the monoethers of ethylene glycol, the monoethers of diethylene glycol, their acetates, the thioethers, their oxides and cyclic thioether oxides. Generally their boiling points are above 100°C and they are capable of dissolving common polyurethane curatives.

The invention accordingly pertains to the use of a non-volatile modifier to dissolve solid components and to reduce viscosity of urethane prepolymer systems so that they are sprayable on conventional equipment.

As indicated, certain solventless systems of commerce are based on "one-shot" urethanes. That is, one component of the system is a mixture of a polyol and a low molecular weight diol and the other is a diphenyl-methane diisocyanate (MDI) modified such that it is liquid. In some cases, the modified MDI can be described as a "quasi-prepolymer" and contains a very high percentage of reactive diisocyanate.

Prepolymer spray systems of commerce contain high levels (30-70%) of volatile solvents the purpose of which is to reduce viscosity and increase work life such that metering, mixing and spraying may be obtained. U.S. 4,195,148, March 25, 1980, Hagen, teaches that lactone viscosity modifiers, in particular gamma butyrolactone, are effective in reducing viscosity and solvating the curatives. The problem with such modifiers is that the compositions are not stable, thus limiting both the time and the temperature of use.

This invention accordingly pertains to the use of essentially non-volatile modifiers which dissolve solid components, reduce viscosity of the urethane system and allow the system to remain stable with time and temperature such that they can be sprayed with conventional equipment even after extended periods of time have elapsed since their preparation.

Previously, the art has used conventional plasticizers such as dioctylphthalate, butylbenzylphthalate, dipropyleneglycoldibenzoate, etc. to reduce viscosity of solventless sprayable urethane but these have been poor and less effective in both solvating solid components and reducing the viscosity than the more recent lactones, in particular gamma butyrolactone. Lactones, however, although effective, react with the components of a urethane system and therefore lack storage stability. The modifiers of this invention are even more effective solvators for the solid components, more effective viscosity reducers and they are stable with the urethane components.

This invention has significant advantages over those of the prior art. One-shot spray systems are based on MDI and are always moisture-sensitive. They cannot be used under humid conditions without extensive blowing or foaming due to reaction with moisture. Those of this invention based on MDI are less subject to blowing than one-shot systems since they contain considerably less reactive isocyanate (2-16% vs. 20-30% of the prior art). Those based on other isocyanates are much less sensitive to this limitation.

Another major advantage of the prepolymer spray system of this invention is the superior properties of the urethane it produces versus those of the one-shot systems. This difference is well known in the industry and includes such important properties as abrasion resistance, cut and tear resistance and tensile strength.

The spray systems of this invention also have major advantages when compared to prepolymer systems dissolved in volatile solvents (to facilitate spraying). The major advantages are:

    a.   The solventless spray can apply high coating thicknesses (25-40 mil) per pass but solvented systems can only apply 5-10 mil. This decreases application time.

    b.   Tack-free time is very short (0.5-2.0 min.) compared to solvented systems (15-30 min.) and allows quick recoat and handling.

    c.   The explosion and inhalation hazards associated with volatile solvents are avoided.

    d.   Shrinkage of the coating is reduced or eliminated.

The significant advantage over the lactone modifiers is the ability to remain stable with time and temperature.

Prepolymers useful in this invention are the reaction products of polyols with diisocyanates such as methylene diphenyldiisocyanate (MDI), tolylene diisocyanate (TDI), bitolylene diisocyanate, hexamethylene diisocyanate, hydrogenated MDI, and isophorone diisocyanate. Polyols can be those generally used to make prepolymers including but not limited to:

Polytetramethylene ether glycol of 650-3000 MW

Polypropylene ether glycol of 200-3000 MW

Polycaprolactone glycol of 500-2000 MW

Polyethylene adipate glycol of 500-3000 MW

Polyethylene propylene adipate glycol of 500-3000 MW

Polyethylene butylene adipate glycol of 500-3000 MW

Polybutylene adipate glycol of 500-3000 MW

Polyoxyethylene ether glycol of 200-4000 MW

Polybutadiene glycol

Castor Oil

Reactive isocyanate contents of the prepolymers typically can range from 2 to 16% by weight.

Curatives for these prepolymers are conventional and generally consist of diamines, such as methylene dianiline (MDA), 4,4'-methylene bis(orthchloroaniline), trimethylene glycol di-p-aminobenzoate, bis (o-aminophenylthio) ethane, 4,4' methylene bis(di-methylanthranilate), and the like. Mixture of diamines or of diamines with diols such as 1,4-butanediol or one of the polyols listed above can be used to modify reaction rates and thus decrease or increase tack free time as required by the application.

As pointed out previously, the viscosity modifier is one or a combination of the following:

a) the monoethers of ethylene glycol (e.g., ethylene glycol monobutyl ether B.P. 169°C)

b) the monoethers of diethylene glycol (e.g., diethylene glycol monobutyl ether B.P. 227°C)

c) their acetates (e.g., ethyleneglycolmonobutyl ether acetate B.P. 235°C)

d) the thioethers (e.g., thiodiethanol B.P. 283°C)

e) their oxides (e.g., dimethylsulfoxide B.P. 188°C)

f) cyclic thioether oxides (e.g., tetrahydrothiophene 1,1-dioxide B.P. 285°C)

The preferred modifier is tetrahydrothiophene-1,1-dioxide.

Equivalent ratios of the reactive components, curatives to prepolymer, can range from 0.75 to 1.30, with .85 to 1.20 being typical and 0.90 to 1.00 being preferred.

The modifier can be used from 1 to 200 parts per hundred parts curative with a preferred range of 5 to 50 parts per hundred parts curative. The modifier should preferably not be used at levels above 100 pph polyurethane (prepolymer plus curative) by weight in order to avoid polyurethane properties at levels lower than desired. For example, a range of 1 to 100 pph modifier to total polyurethane is frequently possible; 5 to 50 pph is usually employed. This invention will permit material temperatures to range from ambient to 100°C with a preferred temperature range of 35°C-70°C.

As is well known, polyurethane curatives ordinarily contain a plurality of active hydrogen sites, ordinarily two active hydrogens, such as are provided by -OH, -NH$_2$, -SH groups, or the like. Most frequently the curative is a polyamine or a polyol, especially a diamine or a diol. Curing conditions may be conventional (i.e., ambient conditions or elevated temperatures).

The following examples in which all quantities are expressed by weight unless otherwise indicated will serve to illustrate the practice of the invention in more detail.

## EXAMPLE 1

This example demonstrates the superior stability obtainable with a viscosity modifier of the invention, viz., tetrahydrothiophene-1,1-dioxide, in comparison to a prior art viscosity modifier, butyrolactone. Stability is evaluated by observing the mixture of curative and viscosity modifier (component "B" of the spray system) to determine the length of time, at a particular test temperature, before a precipitate appears.

Polytetramethylene ether glycol of 1000 molecular weight (PTMEG MW 1000) - tolylene diisocyanate prepolymer of 6.3% NCO content is used as one component "A" of the solventless spray system. The other "B" is prepared by dissolving 45 parts of methylene dianiline (MDA) in 55 parts of tetrahydrothiophene-1,1-dioxide.

This material is cast by hand in a 3:1 ratio A:B with the prepolymer at 65°C and the "B" package at 25°C. This is compared directly with a "B" package using MDA and butyrolactone.

|  | Tetrahydrothiophene dioxide | Butyrolactone |
|---|---|---|
| Tack Free | 45 Seconds | 40 Seconds |
| Hardness | 86A | 90A |
| "B" Stability at 100°C | >4 Weeks | 3 Days |
| "B"    "    at 70°C | >4   " | 2 Weeks |
| "B"    "    at Ambient | Indefinite | 3 - 6 Months |

Stability, as measured by the time required for appearance of a precipitate, is seen to be remarkably greater in the tetrahydrothiophene-1,1-dioxide system then in the lactone system. A loss of reactivity and physical properties accompanies the precipitate. Infra red analysis determines the precipitate to be an amide. No spectral diffeences can be determined with the tetrahydrothiophene-1,1-dioxide after 4 weeks at 100°C.

## EXAMPLE 2

A modified "B" package is prepared using a PTMEG-1000 MDA and tetrahydrothiophene-1,1-dioxide in a weight ratio of 1 to 0.6 to 0.2. This package is shown to be an ambient liquid demonstrating superior solvating power of this modifier. This "B" package is sprayed with the prepolymer of Example 1 in the raio of 3:1 A:B on a Graco Hydracat (trademark) spray system. The resulting composite is tack free in 60 seconds and a tough film is obtained having a Shore hardness of 80A.

Example 1 is repeated using the viscosity modifiers of the invention listed in the following table, which also shows preferred ranges of amounts for each (expressed in parts per hundred parts by weight) of curative. The modifiers provide ambient stability for an indefinite period of time, that is, no precipitate is observed in the mixture of modifier and curative even after extended periods of time at room temperature.

| Viscosity Modifier | Quantity |
|---|---|
| ethyleneglycolmonobutylether | 30 - 40 |
| ethyleneglycolmonomethylether | 30 - 40 |
| ethyleneglycolmonobutylether acetate | 30 - 40 |
| dimethylsulfoxide | 15 - 20 |
| tetrahydrothiophene 1,1-dioxide | 10 - 15 |

3-methyl tetrahydrothiophene 1,1-dioxide          15 - 20

3-hydroxytetrahydrothiophene 1,1-dioxide          20 - 25

a compound of the formula                         35 - 40

- 1 -

CLAIMS

1. A method of making a cured polyurethane article characterised in that the method comprises the steps of:

(i) providing a composition which is a mixture of:

(a) a polyurethane prepolymer;

(b) a curative for the polyurethane prepolymer; and

(c) as a viscosity reducing agent, one or a combination of substances selected from the monoethers of ethylene glycol, the monoethers of diethylene glycol, their acetates, the thioethers, their oxides and cyclic thioether oxides, having boiling points above $100^{\circ}C$ and capable of dissolving (b);

(ii) spraying the said mixture onto a surface; and

(iii) thereafter subjecting the sprayed mixture to curing conditions.

2. A method according to claim characterised in that the said mixture is devoid of volatile organic solvent.

3. A method according to claim 1 or claim 2 characterised in that the prepolymer (a) is a reaction product of poly(alkylene ether) glycol or polyester glycol and tolylene diisocyanate or 4,4'-diphenyl-methane diisocyanate, said reaction product having a reactive isocyanate content of from 2 to 16% by weight.

4. A method according to any of the preceding claims characterised in that the diisocyanate is tolylene diisocyanate.

5. A method according to any of the preceding claims characterised in that the diisocyanate is 4,4'-diphenylmethane diisocyanate.

6. A method according to any of the preceding

claims characterised in that the curative (b) is at least one diamine or diol.

7. A method according to any of the preceding claims characterised in that (c) is tetrahydrothiophene-1,1-dioxide.

8. A method according to any of the preceding claims characterised in that the equivalent ratio of (b):(a) is from 0.75:1 to 1.30:1.

9. A method according to any of the preceding claims characterised in that the equivalent ratio of (b):(a) is from 0.85:1 to 1.20:1.

10. A method according to any of the preceding claims characterised in that the equivalent ratio of (b):(a) is from 0.90:1 to 1.00:1.

11. A method according to any of the preceding claims characterised in that the amount of (c) is from 1 to 100 parts per 100 parts by weight of prepolymer (a) plus curative (b).

12. A method according to claim 11 characterised in that the amount of (c) is from 5 to 50 parts per 100 parts by weight of prepolymer (a) plus curative (b).

13. A method according to any of the preceding claims characterised in that the curative (b) is first dissolved in (c), and the resulting solution is combined with the prepolymer (a) immediately prior to spraying, the amount of (c) being from 1 to 200 parts per 100 parts by weight of (b).

14. A method according to any of the preceding claims characterised in that the amount of (c) is from 5 to 50 parts per 100 parts by weight of (b).

15. A composition characterised in that it comprises a mixture of:

      (b) a curative for a polyurethane prepolymer; and

(c)  as a viscosity reducing agent, one or a
combination of substances selected from
the monoethers of ethylene glycol, the
monoethers of diethylene glycol, their
acetates, the thioethers, their oxides
and cyclic thioether oxides, having
boiling points above 100°C and capable
of dissolving (b);

the curative (b) being dissolved in (c) and the
amount of (c) being from 1 to 200 parts per 100 parts
by weight of (b).

16.  A composition according to claim 15
characterised in that the curative (b) is at least
one diamine or diol curative.

17.  A composition according to claim 15 or claim
16 characterised in that (c) is tetrahydrothiophene-1,
1-dioxide.

18.  A two-part system for making a polyurethane
article by spraying characterised in that it comprises
a first part which is

(a)  a polyurethane prepolymer, and a second part
which is

(b)  a curative for the polyurethane prepolymer,
either or both of said parts containing

(c)  as a viscosity reducing agent, one or a
combination of substances selected from the
monoethers of ethylene glycol, the monoethers
of diethylene glycol, their acetates, the
thioethers, their oxides and cyclic thioether
oxides, having boiling points above 100°C and
capable of dissolving (b).

19.  A system according to claim 18 characterised
in that (c) is tetrahydrothiophene-1,1-dioxide.

20.  A system according to claim 18 or claim 19
characterised in that the second part is the curative (b) dissolved in (c).

21.  A cured polyurethane characterised in that it comprises a reaction product of

(a)    a polyurethane prepolymer with

(b)    a curative for the polyurethane prepolymer, said cured polyurethane further containing

(c)    as a viscosity reducing agent, one or a combination of substances selected from the group consisting of the monoethers of ethylene glycol, the monoethers of diethylene glycol, their acetates, the thioethers, their oxides and cyclic thioether oxides, having boiling points above $100^{o}$C and capable of dissolving (b).

22.  A cured polyurethane according to claim 21 characterised in that (c) is tetrahydrothiophene-1,1-dioxide.

0049985

European Patent
Office

**EUROPEAN SEARCH REPORT**

Application number

EP 81 30 4589.5

| Category | Citation of document with indication, where appropriate, of relevant passages | Relevant to claim |
|---|---|---|
| | **DOCUMENTS CONSIDERED TO·BE RELEVANT** | |
| X | GB - A - 1 087 366 (ETS KUHLMANN) <br> * page 2, lines 3 to 7 and 40 to 45; examples 4 to 7, 9 * <br> -- | 1,3-6, 13,15, 16,18, 20-22 |
| | GB - A - 1 097 117 (ETS KUHLMANN) <br> * page 2, lines 54, 55; examples 3, 6, 7 * <br> -- | 1,3-7, 15-22 |
| D,A | US - A - 4 195 148 (E.L. HAGEN) <br> & EP - A1 - 0 007 195 <br> -- | |
| A | DE - A - 2 316 454 (PECHINEY UGINE KUHLMANN) <br> * example 1 * <br> ---- | |

**CLASSIFICATION OF THE APPLICATION (Int. Cl.³)**

C 08 G 18/10
C 08 K 5/04
C 08 K 5/36
C 08 K 5/45
C 08 L 75/04
C 09 D 3/72

**TECHNICAL FIELDS SEARCHED (Int. Cl.³)**

C 08 G 18/10
C 08 K 5/45
C 08 L 75/04
C 09 D 3/72

**CATEGORY OF CITED DOCUMENTS**

X: particularly relevant
A: technological background
O: non-written disclosure .
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 18-12-1981 | WIBMER |

EPO Form 1503.1  06.78